# EUROPÄISCHE PATENTSCHRIFT

(11) **EP 1 132 614 B1**
(45) Veröffentlichungstag und Bekanntmachung des Hinweises auf die Patenterteilung: **18.05.2016**
(21) Anmeldenummer: 01105629.8
(22) Anmeldetag: 07.03.2001
(51) Int. Cl.: F03D 7/04

(54) **Regelungssystem für eine Windkraftanlage**
Control system for a wind turbine
Système de réglage pour une éolienne

(30) Priorität: 09.03.2000 DE 10011393
(43) Veröffentlichungstag der Anmeldung: 12.09.2001
(73) Patentinhaber: GENERAL ELECTRIC COMPANY, Schenectady, NY 12345 (US)
(72) Erfinder: Weitkamp, Roland, 49191 Belm (DE)
(74) Vertreter: Zimmermann & Partner Patentanwälte mbB

(56) Entgegenhaltungen:
- GB-A- 2 089 901
- US-A- 4 703 189

## Beschreibung

Die Erfindung betrifft ein Regelungssystem zur Erhöhung der Wirtschaftlichkeit von Windkraftanlagen (WKA).

### Stand der Technik

Der erzielbare Jahresertrag einer Windturbine hängt neben der installierten Generatorleistung entscheidend vom Rotordurchmesser ab. Zur Steigerung der Wirtschaftlichkeit ist es daher wünschenswert, möglichst große Rotoren zu verwenden. Dem stehen jedoch die bei gleichem Anlagenverhalten mit zunehmendem Rotordurchmesser mindestens im Quadrat des Durchmessers ansteigenden Belastungen für Rotor, Maschinenkopf, Turm und Gründung entgegen. Derzeit übliche Verhältnisse von installierter Generatorleistung zu Rotorfläche (rating) liegen zwischen 460 und 330 W/m², wobei letzterer Wert für binnenlandoptimierte Anlagentypen mit Blattverstellung gilt.

Eine in der Windenergietechnik häufig angewendete Strategie besteht darin, eine bestehende Maschine für Schwachwindstandorte mit einem größeren Rotordurchmesser auszurüsten, wobei dann die Abschaltgeschwindigkeit von beispielsweise 25 m/s auf 20 m/s abgesenkt wird, damit die auftretenden Belastungen im zulässigen Bereich bleiben.

Bei Anlagen mit Blattverstellung (Pitchanlagen) ist es zudem üblich, bereits vor dem Erreichen der Nennleistung die Rotorblätter in Richtung Fahnenstellung zu verstellen, um die Belastungen (vor allem auf den Turm) zu reduzieren.

Eine seit längerem bekannte komplexere Strategie zur Reduzierung der Belastungen ist das Absenken der Rotordrehzahl und/oder Leistungsabgabe der Turbine bei hohen Windgeschwindigkeiten. Eine Reduzierung der Rotordrehzahl hat aus technischen Gründen (Auslegung von Getriebe und/oder Generator und/oder Umrichter) eine mindestens im gleichen Verhältnis reduzierte Leistungsabgabe zur Folge. Da jedoch bekannterweise (s. z.B. "The Statistical Variation of Wind Turbine Fatigue Loads", Riso National Laboratory, Roskilde DK, 1998) der Großteil der die Lebensdauer verkürzenden hohen Belastungen bei hohen Windgeschwindigkeiten auftritt, wird diese Strategie vor allem an Binnenlandstandorten erfolgreich zur Verbesserung der Wirtschaftlichkeit von Windenergieanlagen angewandt. Insbesondere im Binnenland können somit größere Rotoren gefahren werden, die bei den häufig auftretenden geringen Windgeschwindigkeiten höhere Erträge liefern, bei den selteneren hohen Windgeschwindigkeiten aber abgeregelt werden müssen.

Weiterhin wird im Stand der Technik (DE 31 50 824 C2) eine gegensätzliche Strategie für eine drehzahlstarre Windturbine vorgeschlagen, die es durch Auswertung der Signale eines Windgebers ermöglichen soll, bei hohen Windgeschwindigkeiten mit geringer Turbulenz die Leistungsabgabe der Maschine durch Verstellung des Rotorblattwinkels über die Nennleistung hinaus zu steigern.

### Beschreibung der Erfindung

Durch die angeführte bekannte Strategie der Reduzierung der Leistungsabgabe bei hohen Windgeschwindigkeiten ist es z.B. bei einer drehzahlvariablen Pitchanlage mit einem Regel-Algorithmus, der in Abhängigkeit vom zeitlich gemittelten Pitchwinkel die Rotordrehzahl abregelt, möglich, sehr große Verhältnisse von Rotordurchmesser zu Generatorleistung ohne Erhöhung der Bauteilermüdungsbelastung gegenüber konventionell ausgelegten Maschinen zu erzielen. Ein rating von 330 bis 280 W/m² ist insbesondere bei Binnenlandstandorten erreichbar und wirtschaftlich sinnvoll.

Da die Auslegung der Tragstrukturen der Windkraftanlagen aus Sicherheitsgründen grundsätzlich unter sehr ungünstigen Annahmen erfolgt (z.B. hohe Windturbulenz und maximale in der Auslegungswindzone auftretende Windverteilung), sind bei der überwiegenden Anzahl der Standorte erhebliche Auslegungsreserven in den Maschinen vorhanden. Es stellt sich also das Problem, wie diese in der Regel vorhandenen Auslegungsreserven zur Verbesserung der Wirtschaftlichkeit der Turbine genutzt werden können.

Erfindungsgemäß wird diese Aufgabe dadurch gelöst, dass mittels in der Windkraftanlage ohnehin vorhandener oder/und zusätzlich installierter Sensorik mit nachfolgender Signalverarbeitungsanlage eine direkte oder indirekte Quantifizierung der aktuellen Turbinenbelastungen erfolgt. Durch einen Vergleich mit rechnerisch oder empirisch ermittelten zulässigen Belastungen (oder hiermit korrelierten Größen) wird die Turbine jeweils mit der in wirtschaftlicher Hinsicht optimalen Rotordrehzahl und Leistungsausbeute betrieben.

Abweichend vom bisher üblichen Stand der Technik, bei dem durch die Betriebsregelung der Blattwinkel und/oder die Drehzahl nach festgeschriebenen Funktionen in Abhängigkeit von Leistung, Blattwinkel oder Windgeschwindigkeit abgeregelt werden, soll diese Abregelung nunmehr nur in dem Maße erfolgen, wie es auf Grund der lokalen Standort- oder Witterungsverhältnisse zum aktuellen Zeitpunkt erforderlich ist, um eine optimale Wirtschaftlichkeit zu erreichen.

Ein einfacher Algorithmus, der dieses ermöglicht, basiert auf der statistischen Auswertung einer, mehrerer oder aller der ohnehin bei vielen modernen WKA (z.B. drehzahlvariablen Pitchanlagen) kontinuierlich erfassten Betriebsdaten genannten Messgrößen (z.B. Rotordrehzahl, Generatorleistung, Pitchwinkel, Pitchrate, Windgeschwindigkeit und Windrichtung).

Mit der statistischen Auswertung ist hier zumindest die fortlaufende Ermittlung von Minimum, Maximum, Mittelwert und Standardabweichung für verschiedene, gleitende Zeitintervalle delta t (30 s bis 60 min) gemeint. Komplexere statistische Auswertungen der Betriebsdaten oder deren Ableitungen führen zu besseren Regelungserfolgen. Da es sich bei dem Wind um eine stochastisch verteilte Größe handelt, lassen sich die Messgrößen nur anhand von Verteilungs- und Wahrscheinlichkeitsfunktionen oder Kollektiven sinnvoll erfassen und rechnerisch darstellen. Anhand von Messungen oder Simulationsrechnungen lassen sich mit ausreichender Genauigkeit Korrelationskoeffizienten der statistischen Daten zu den Standort- und Witterungsverhältnissen sowie den aktuellen Bauteilbelastungen bestimmen. Beispielsweise stehen der mittlere Pitchwinkel und die mittlere Rotordrehzahl für eine vorgegebene Maschinenkonfiguration in einem direkten Zusammenhang zur mittleren Windgeschwindigkeit; die Standardabweichung der beiden erstgenannten Größen ermöglicht eine Aussage über die Turbulenzintensität (Böigkeit) des Windes. Somit ist es möglich, neben den direkt gemessenen Betriebsdaten auch statistische Aussagen über wichtige Belastungsdaten (z.B. Blattbiegemoment und Turmschub) zu treffen. Diese Ist-Verteilungen der Belastungen oder der mit diesen in einem direkten Zusammenhang stehenden Größen werden mit rechnerisch oder empirisch ermittelten Soll-Verteilungsfunktionen verglichen. Diese Sollfunktionen können für jeden Standort projektspezifisch ermittelt und in einem Datenspeicher des Regelungssystems abgelegt werden.

Anhand des Blockschaltdiagramms wird nachfolgend beispielhaft eine bevorzugte Ausführungsform eines Regelungssystems mit der erfindungsgemäßen Regelungsstrategie erläutert.

In dem Blockschaltdiagramm kennzeichnen eckige Rahmen Signalverarbeitungsanlagen bzw. Berechnungsmodule eines größeren Softwarepakets, welches auf einer Signalverarbeitungsanlage installiert ist. Seitlich gerundete Rahmen stehen für Eingangsdaten für das Regelungssystem, unabhängig davon, ob diese Daten an der Maschine gemessen oder extern bereitgestellt werden. Oben und unten gerundete Rahmen stehen für Datenspeicher, auf denen alle zur Ausführung des Regelalgorithmus benötigten Daten, die sowohl von der internen Datenerfassung bzw. -Analyse, als auch von externen Datenquellen zur Verfügung gestellt werden, abgelegt sind. Mit durchgezogenen Linien dargestellte Elemente sind für das Regelungssystem unbedingt erforderlich, gestrichelte Elemente sind optionale Bausteine, die die Funktion des Reglers verbessern und somit einen höheren Energieertrag erlauben, das Regelungskonzept aber auch zunehmend komplexer werden lassen.

Links von der in der linken Abbildungshälfte befindlichen senkrechten strichpunktierten Linie befindet sich die vereinfachte Darstellung der nach dem Stand der Technik eingesetzten Regelungssysteme. Eingangsgrößen sind die von Messsensoren permanent erfassten Betriebsgrößen wie Rotor- und Generatordrehzahl n_{R} und n_{G}, die elektrische Leistung Pₑₗ, das Generatormoment M_{G}, der Blatt- oder Pitchwinkel ϑ und die Pitchrate ϑ' sowie die Windgeschwindigkeit v_{w} und die Windrichtung v_{dir}. In Abhängigkeit von diesen Messwerten wird die Maschine nach einem im Betriebsführungsrechner implementierten Algorithmus geregelt (Standardregler). Stellgrößen sind der Pitchwinkel ϑₛₒₗₗ und/oder das Generatormoment M_{Gsoll} (z.B. auch durch Wahl der Generatorstufe bei polumschaltbaren Asynchronmaschinen). Aus Vereinfachungsgründen nicht dargestellt ist der Regelkreis, bei dem über die Stellglieder die Sollwerte in Istwerte überführt werden, die dann als Betriebsgrößen erfasst wie dargestellt bei Reglereingang dienen.

Zusätzliche Messgrößen (z.B. Temperaturen, Hydraulikdrücke, Turmkopfbeschleunigungen, Ölstands- und Verschleißanzeigen) ermöglichen im Stand der Technik die Erkennung von unzulässigen Anlagenzuständen und veranlassen gegebenenfalls die Stillsetzung der Maschine.

Beidem erfindungsgemäßen Regelungssystem werden die Betriebsdaten einer statistischen Datenerfassung unterzogen und in Form von Kollektiven oder Verteilungen in einem Datenspeicher abgelegt. Optional werden im so genannten Belastungsmodell die statistischen Betriebsdaten mittels der in Simulationsrechnungen ermittelten Korrelationsfunktionen in statistische Belastungsdaten überführt.

Komplexere Algorithmen basieren auf zusätzliche, in direkterem Zusammenhang zu den Belastungen stehenden Messgrößen, und ermöglichen eine deutlich präzisere Ermittlung der vorhandenen Belastungsverteilung und somit ein dichteres Herangehen an die Auslegungsgrenzen, ohne die bei einfachen Algorithmen erforderlichen Sicherheitsabschläge.

Denkbare Sensoren an der Maschine sind Beschleunigungssensoren im Turmkopf und Rotorblättern und/oder Dehnmessstreifen an repräsentativen Punkten der Tragstruktur (z.B. Blattwurzeln, Rotorwelle, Turmfuß).

Zusätzliche Windfelddaten, die idealer Weise die ungestörte Anströmung vor dem Rotor charakterisieren, ermöglichen eine erhebliche Verbesserung des Regelverhaltens. In Frage kommen hierzu im wesentlichen laseroptische und/oder akustische (Ultraschall-)Messverfahren, die sowohl die Messung einzelner Punkte des Windfeldes als auch kompletter Windprofile bzw. Windfelder in oder auch weit vor der Rotorebene erlauben. Eine weitere Verbesserung des Regelverhaltens wird durch eine Vernetzung der Regelsysteme der verschiedenen Turbinen eines Windparks erreicht, da die deutlich größere Datenbasis eine schnellere, aber trotzdem statistisch abgesicherte Reaktion der Regelungssysteme sicherstellt.

Sämtliche ermittelten Kollektive bzw. Verteilungen werden, vorzugsweise klassiert nach Betriebsjahr, mittlerer Windgeschwindigkeit und Turbulenzintensität, gespeichert.

Bei ausreichend genauer Ermittlung der Belastungen mittels Erfassung von Belastungsdaten ist es sinnvoll, die Belastungswechsel durch bekannte Auszählverfahren in Belastungskollektive oder unter Berücksichtigung der Mittelwerte in so genannte Markov-Matrizen zu transformieren (online-rainflow counting). Hierzu stehen zum Beispiel aus der Luft- und Raumfahrttechnik bereits industriell gefertigte Mikrochips zur Verfügung.

Den gemessenen bzw. aus Messdaten errechneten Verteilungen werden die Sollverteilungen der gleichen Größen gegenübergestellt. Hierzu werden Konstruktions-, Planungs- und Finanzierungsdaten extern ermittelt, in das System eingegeben und in einem Datenspeicher abgelegt. Aus diesen Daten werden über ein Wirtschaftlichkeitsmodell die Sollverteilungen ermittelt. Konstruktionsdaten sind zum Beispiel die für die einzelnen Komponenten zulässigen Belastungsverteilungen, ein Beispiel für die Planungsdaten ist die zu erwartende Windverteilung am Standort, die Finanzierungsdaten beinhalten neben den gesamten Projektkosten auch die laufenden Kreditkosten, die laut Finanzierungsplan erforderlichen Energieerträge sowie die aktuelle Einspeisevergütung. Monatliche Updates dieser Daten per Fernüberwachung ermöglichen eine umgehende Anpassung des Regelungssystems an veränderte Rahmenbedingungen wie zum Beispiel Änderungen der Einspeisevergütung oder der Finanzierungskosten, neue Erkenntnisse über die zulässigen Bauteilbelastungen oder auch verbesserte Regleralgorithmen. Daten über die überregionale Jahreswindverteilung ermöglichen einerseits durch Vergleich mit der gemessenen Standortwindverteilung eine Korrektur der Planungsdaten, andererseits kann die Maschine in schlechten Windjahren zur Einhaltung des Finanzierungsplans mit einer "schärferen" Leistungskennlinie betrieben werden.

Die so ermittelten Sollverteilungen werden im Betriebspunktregler den Istverteilungen gegenübergestellt und so der unter den aktuellen Witterungs- und Standortbedingungen optimale Betriebspunkt vorgegeben. Die Stellgrößen ϑₒₚₜ (Blattwinkel) und M_{Gopt} bzw. n_{Gopt} (Generatormoment bzw. -drehzahl) sind als Mittelwertvorgaben zu verstehen, von denen die vom Standardregler ausgegebenen Momentansollwerte zum Ausregeln von Windturbulenzen kurzfristig abweichen.

Ein Ergebnis eines derartigen Regelungssystems wird es sein, dass die Maschine in den ersten Betriebsjahren mit höherer Leistungsausbeute betrieben wird, um die Finanzierungskosten möglichst schnell zu senken, in späteren Jahren dafür wird ein lastarmer Betrieb mit reduzierter Energieausbeute zur Verlängerung der Lebensdauer das wirtschaftliche Optimum darstellen.

Idealer Weise wird das beschriebene Regelungssystem so weit ausgebaut, dass die aktuellen Energieerzeugungskosten (Cost Of Energy COE) online ermittelt werden. Hierzu ist es erforderlich, dass dem Belastungsmodell ein Beanspruchungsmodell für die einzelnen Anlagenkomponenten (eine Beschränkung auf die Hauptkomponenten Rotorblätter, Getriebe, Generator und Umrichter sowie Turm ist ausreichend genau) sowie ein Schädigungsmodell nachgeschaltet wird. Das Beanspruchungsmodell transformiert die Belastungsverteilungen in Beanspruchungsverteilungen in repräsentativen Stellen der Komponenten und basiert auf den bei der Bauteilauslegung angewendeten Verfahren. Die Ergebnisse von FE-Rechnungen können beispielsweise durch wenige Einflussfaktoren für einige kritische Stellen zusammengefasst werden. Das Schädigungsmodell vergleicht die vorhandenen Beanspruchungen mit den vom Bauteil ertragbaren Beanspruchungen (z.B. Wöhlerlinien) und errechnet so die aktuelle Bauteilschädigung (die Schädigung eines Bauteils gibt Auskunft über die verbleibende Restlebensdauer). Das Schädigungsmodell ist somit auf eine Datenbasis des Werkstoff- bzw. Komponentenverhaltens angewiesen, die extern zur Verfügung gestellt wird, und modular aufgebaut sein sollte, damit sie im Laufe der Turbinenlebensdauer den neuesten Erkenntnissen (z.B. Wöhlerversuche an Originalbauteilen, Betriebserfahrungen aus der Serienproduktion) angepasst werden kann. Da bei dem heutigen Stand der Technik insbesondere das Werkstoffverhalten mangels ausreichender Datenbasis sehr konservativ angenommen werden muss, ist hier ein deutliches Potenzial zur Ertragssteigerung vorhanden.

Ist das Schädigungsmodell so weit ausgebaut, dass für die wichtigen Hauptkomponenten online die Schädigung und somit auch die Schädigungsrate errechnet wird, kann daraus mit wenig Aufwand eine äquivalente Schädigungsrate für die gesamte Turbine (Equivalent Damage Rate, EDR) bestimmt werden. Die äquivalente Schädigungsrate (Einheit: DM/h) ist ein Maß für die Verschleißkosten pro Zeiteinheit im aktuellen Betriebszustand der Turbine. Die aktuellen Energieerzeugungskosten ergeben sich sodann durch die Division der Summe aus EDR und sonstiger Betriebskosten durch die derzeitige Einspeiseleistung.

Bei dieser idealen Ausbaustufe der Regelungsstrategie, bei der die Wirtschaftlichkeit der Windturbine auf die entscheidende Kennzahl Energieerzeugungskosten (COE) reduziert wird, muss das Wirtschaftlichkeitsmodell so weit ausgebaut werden, dass es als Vergleichgröße zu den aktuellen COE die maximal zulässigen COE bestimmt, bei denen die Turbine noch betrieben werden soll. Sind die aktuellen COE bei wenig Wind zu hoch, wird die Maschine vom Netz genommen. Sind die aktuellen COE bei hohen Windgeschwindigkeiten zu hoch, senkt der Betriebspunktregler durch Abregeln der Turbine die übermäßigen Beanspruchungen, wodurch die COE abgesenkt werden. Anhand der online COE-Bestimmung kann somit durch eine einfache Regelschleife der unter den aktuellen Standort- und Witterungsbedingungen optimale Betriebspunkt mit den minimalen COE bestimmt werden. Sind die COE in diesem optimalen Betriebspunkt höher als die vom Wirtschaftlichkeitsmodell bestimmten maximal zulässigen COE, wird die Turbine stillgesetzt, bis günstigere Bedingungen (z.B. geringere Turbulenz oder geringere Windgeschwindigkeit) vorliegen. Auf diese Weise können die Turbinen bei geringer Turbulenz noch bei erheblich höheren Windgeschwindigkeiten Strom einspeisen, als dieses beim Stand der Technik der Fall ist.

Als weitere Ausbaustufe enthält das beiliegende Schema am rechten Bildrand rechts von der vertikalen strichpunktierten Linie einen Kurzzeitregler zum Abbau kurzzeitiger Belastungsspitzen. Eingangsdaten hierzu sind die Belastungs- und eventuell auch Windfelddaten, die im Gegensatz zum Betriebspunktregler nicht statistisch erfasst, sondern einer Momentanwertanalyse unterzogen werden, um in einem Belastungsprognose genannten Signalverarbeitungsmodel Lastspitzen vorherzusagen, die von dem Kurzzeitregler durch Begrenzung des Pitchwinkels oder der Rotordrehzahl abgemindert werden.

Insbesondere durch Daten benachbarter, windaufwärts gelegener WKA wird so eine deutliche Reduzierung der Anlagenbelastung und somit auch der aktuellen COE bei Windgeschwindigkeiten oberhalb Nennwinds ermöglicht, da Maschinen, die sich in Windrichtung hinter anderen Turbinen befinden, mit geeigneter Zeitverzögerung genau auf die in der vorstehenden Turbine registrierten Windereignisse reagieren können. So können teilweise die für nachstehende Turbinen unvermeidbar vorhandenen Nachteile (Nachlaufturbulenz) kompensiert werden.

Um zu gewährleisten, dass die Anlagenverfügbarkeit bei Versagen einer Teilkomponente des beschriebenen Regelungssystems nicht reduziert wird, ist dass Betriebsführungssystem vorzugsweise so zu gestalten, dass der auf der linken Seite des Schemas dargestellte Standardregler hardwaremäßig von den Komponenten des Betriebspunktreglers getrennt ist. Ist somit der Betriebspunktregler nicht verfügbar, bleibt die Maschine trotzdem am Netz, allerdings mit der dem Stand der Technik entsprechenden Leistungsbegrenzung bei hohen Windgeschwindigkeiten.

Die beschriebene Regelungsstrategie beschränkt sich keineswegs auf die im Schema dargestellte bevorzugte Ausführungsform für eine drehzahlvariable Pitchanlage sondern ist sinngemäß auf drehzahlstarre oder polumschaltbare Pitchanlagen oder auf Stall- oder Activ-Stallanlagen übertragbar.

Weiterhin sind eine Vielzahl von Detaillierungen und Verfeinerungen des Systems vorstellbar (zusätzliche Messgrößen, Schädigungsmodule für weitere Anlagenkomponenten, usw.), die jedoch alle auf der Grundidee der Bestimmung des unter den aktuellen Standort und Witterungsbedingungen optimalen Betriebszeitpunktes basieren.

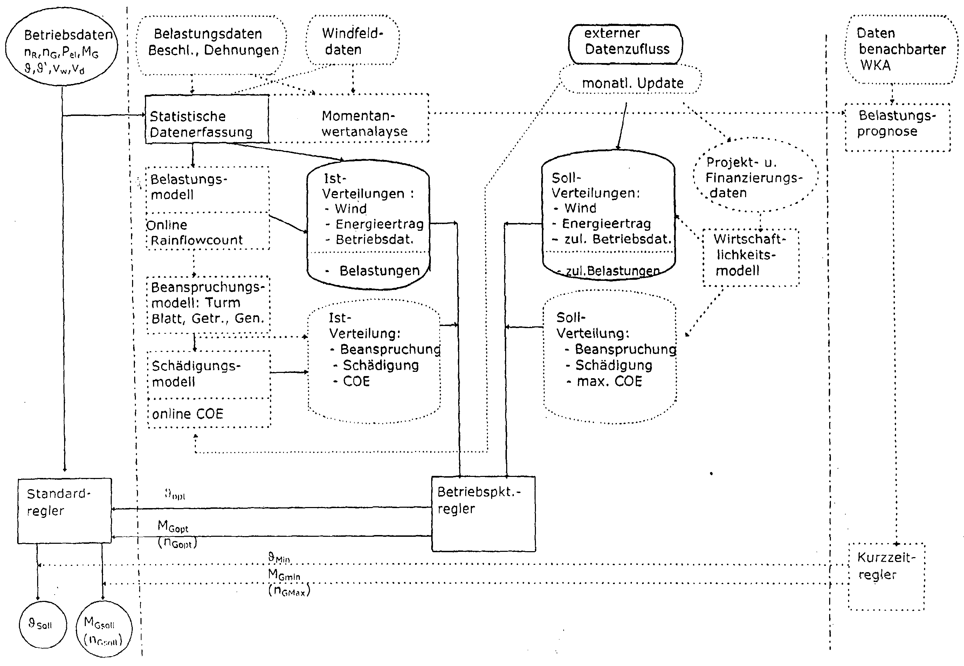

## Patentansprüche

1. Regelungssystem für eine Windkraftanlage (WKA), **gekennzeichnet durch** Mittel zur Erfassung von Messgrößen, die eine direkte oder indirekte Quantifizierung der aktuellen Standort- und witterungsabhängigen Turbinenbelastung und/oder -beanspruchung ermöglichen,
eine geeignete Signalverarbeitungsanlage zum Verarbeiten der Messgrößen zu Ist-Kollektiven oder Ist-Verteilungsfunktionen, und
eine nachgeschaltete elektronische Signalverarbeitungsanlage, die es ermöglicht, die Ist-Kollektive oder Ist-Verteilungsfunktionen aus extern eingegebenen Daten zur Wirtschaftlichkeit der Windkraftanlage ermittelten Soll-Kollektiven oder Soll-Verteilungsfunktionen gegenüberzustellen, und eine unter Berücksichtigung der technischen Auslegung der WKA erforderliche Leistungsreduzierung bei Nennwindgeschwindigkeit und Windgeschwindigkeiten oberhalb der Nennwindgeschwindigkeit zur Verbesserung der unter den aktuellen Betriebsbedingungen gegebenen Wirtschaftlichkeit einzuschränken.

2. Regelungssystem nach Anspruch 1, **gekennzeichnet dadurch, dass** es sich um eine WKA mit Blattverstellung in Richtung Fahne (Pitchanlage) handelt.

3. Regelungssystem nach Anspruch 1, **gekennzeichnet dadurch, dass** es sich um eine Stall- oder Activ-Stallanlage handelt.

4. Regelungssystem nach einem der vorstehenden Ansprüche, **gekennzeichnet dadurch, dass** es sich um eine Anlage mit drehzahlvariabler Betriebsweise oder um eine Maschine mit mindestens zwei festen Betriebsdrehzahlen handelt.

5. Regelungssystem nach einem der vorstehenden Ansprüche, **gekennzeichnet dadurch, dass** die durch die Sensoren überwachten Messgrößen eine, mehrere oder alle Größen der Betriebsdaten Rotordrehzahl, Generatordrehzahl, elektrische Leistung, Generatordrehmoment, Blattwinkel, Blattwinkelverstellrate, Windgeschwindigkeit, Windrichtung beinhalten.

6. Regelungssystem nach einem der vorstehenden Ansprüche, **gekennzeichnet dadurch, dass** die durch Sensoren überwachten Messgrößen Beschleunigungen in Rotorblättern und/oder Maschinengondel und/oder Turm beinhalten.

7. Regelungssystem nach einem der vorstehenden Ansprüche, **gekennzeichnet dadurch, dass** die durch Sensoren überwachten Messgrößen Dehnungen an repräsentativen Bauteilpunkten (z.B. Blattwurzel, Rotorwelle, Maschinenrahmen, Turm) oder Verformungen in elastischen Lagerungen beinhalten.

8. Regelungssystem nach einem der vorstehenden Ansprüche, **gekennzeichnet dadurch, dass** die überwachten Messgrößen Daten des Windfeldes in oder vor der Rotorebene beinhalten.

9. Regelungssystem nach einem der vorstehenden Ansprüche, **gekennzeichnet dadurch, dass** die überwachten Messgrößen Messdaten von anderen WKA, die über ein Netzwerk zur Verfügung gestellt werden, beinhalten.

10. Regelungssystem nach einem der vorstehenden Ansprüche, **gekennzeichnet dadurch, dass** aus den Ist-Kollektiven mittels der geeigneten Signalverarbeitungsanlage Bauteilschädigungen errechnet werden.

11. Regelungssystem nach einem der vorstehenden Ansprüche, **gekennzeichnet dadurch, dass** aus den ausgewerteten und extern eingespeisten Daten mittels der Signalverarbeitungsanlage aktuelle Energieerzeugungskosten (online Cost of Energy, COE) errechnet werden.

12. Regelungssystem nach einem der vorstehenden Ansprüche, **gekennzeichnet dadurch, dass** die geeignete Signalverarbeitungsanlage eingerichtet ist, Belastungsdaten der Windkraftanlage in Belastungskollektive oder unter Berücksichtigung der Mittelwerte in Markov-Matrizen zu transformieren (online-rainflow counting).

## Claims

1. A control system for a wind power plant (WPP), **characterized by**
means for sensing measurement values, which allow a direct or indirect quantification of the current loading and/or stress on the turbine occurring depending on the local and meteorological conditions,
a suitable signal processing system for processing the measurement values into actual spectra or actual distribution functions, and
an electronic signal processing system downstream of the suitable signal processing system, which allows to compare the actual spectra or actual distribution functions with target spectra or target distribution functions that are determined from externally supplied data regarding the economic efficiency of the wind power plant, and to restrict a required power reduction in consideration of the technical design of the WPP in cases of nominal wind velocity and in cases of wind velocities above the nominal wind velocity in order to improve the economic efficiency given at the current operating conditions.

2. The control system according to claim 1, **characterized in that** the WPP is a WPP having blades adjustable in the direction of the feathered pitch (pitch-type plant).

3. The control system according to claim 1, **characterized in that** the WPP is a stall or active stall plant.

4. The control system according to one of the preceding claims, **characterized in that** the WPP is a plant with variable-speed operation or a machine with at least two fixed operating speeds.

5. The control system according to one of the preceding claims, **characterized in that** the measurement values monitored by the sensors include one, a plurality or all of the values of the operating data from rotor speed, generator speed, electric power, generator rotational moment, blade angle, blade angle adjustment rate, wind velocity, wind direction.

6. The control system according to one of the preceding claims, **characterized in that** the measurement values monitored by sensors include accelerations in rotor blades and/or nacelle and/or tower.

7. The control system according to one of the preceding claims, **characterized in that** the measurement values monitored by sensors include stretching on representative points of components (e.g. blade root, rotor shaft, machine frame, tower) or deformations in elastic bearings.

8. The control system according to one of the preceding claims, **characterized in that** the monitored measurement values include data of the wind field in or before the rotor plane.

9. The control system according to one of the preceding claims, **characterized in that** the monitored measurement values include measurement data from other WPP, which are supplied via a network.

10. The control system according to one of the preceding claims, **characterized in that** by means of the suitable signal processing system, damages of the components are computed from the actual spectra.

11. The control system according to one of the preceding claims, **characterized in that** by means of the signal processing system, current energy generating costs (online Cost of Energy, COE) are computed from the evaluated and externally supplied data.

12. The control system according to one of the preceding claims, **characterized in that** the suitable signal processing system is configured to transform the load data of the wind power plant into load spectra or under consideration of the mean values into Markov matrices (online-rainflow counting).

## Revendications

1. Système de régulation pour une éolienne (Windkraftanlage, WKA), **caractérisé par**
des moyens d'acquisition de grandeurs de mesure qui permettent une quantification directe ou indirecte de la charge et/ou sollicitation de turbine actuelle dépendante du site et des intempéries,
une installation de traitement de signal adéquate pour le traitement des grandeurs de mesure en collectifs effectifs ou fonctions de répartition effectives, et
une installation de traitement de signal électronique connectée en aval qui permet de mettre les collectifs effectifs ou fonctions de répartition effectives issus de données entrées par voie externe concernant la rentabilité de l'éolienne en regard de collectifs de consigne ou de fonctions de répartition de consigne déterminés, et de limiter une réduction de puissance nécessaire compte tenu de la conception technique de l'éolienne (WKA) en cas de vitesse de vent nominale et de vitesses de vent supérieures à la vitesse de vent nominale en vue d'améliorer la rentabilité donnée dans les conditions d'exploitation actuelles.

2. Système de régulation selon la revendication 1, **caractérisé en ce qu'**il s'agit d'une éolienne (WKA) à orientation de pales en drapeau (installation pitch).

3. Système de régulation selon la revendication 1, **caractérisé en ce qu'**il s'agit d'une installation stall ou active stall.

4. Système de régulation selon l'une des revendications précédentes, **caractérisé en ce qu'**il s'agit d'une installation à fonctionnement à vitesse de rotation variable ou d'une machine à au moins deux vitesses de rotation de fonctionnement fixes.

5. Système de régulation selon l'une des revendications précédentes, **caractérisé en ce que** les grandeurs de mesure surveillées par les capteurs incluent une, plusieurs ou toutes les grandeurs des données de fonctionnement que sont la vitesse de rotation de rotor, la vitesse de rotation de générateur, la puissance électrique, le couple de générateur, l'angle de pale, le taux de réglage d'angle de pale, la vitesse du vent, la direction du vent.

6. Système de régulation selon l'une des revendications précédentes, **caractérisé en ce que** les grandeurs de mesure surveillées par capteurs incluent des accélérations au niveau de pales de rotor et/ou de la nacelle et/ou du mât.

7. Système de régulation selon l'une des revendications précédentes, **caractérisé en ce que** les grandeurs de mesure surveillées par capteurs incluent des allongements au niveau de points de composant représentatifs (par ex. racine de pale, arbre de rotor, châssis de machine, mât) ou des déformations dans des paliers élastiques.

8. Système de régulation selon l'une des revendications précédentes, **caractérisé en ce que** les grandeurs de mesure surveillées incluent des données du champ de vent dans ou devant le plan de rotor.

9. Système de régulation selon l'une des revendications précédentes, caractérisé en ce les grandeurs de mesure surveillées incluent des données de mesure d'autres éoliennes (WKA), qui sont mises à disposition via un réseau.

10. Système de régulation selon l'une des revendications précédentes, **caractérisé en ce que** des détériorations de composant sont calculées à partir des collectifs effectifs moyennant l'installation de traitement de signal adéquate.

11. Système de régulation selon l'une des revendications précédentes, **caractérisé en ce que** des coûts de production d'énergie actuels (online Cost of Energy, COE) sont calculés à partir des données évaluées et injectées par voie externe moyennant l'installation de traitement de signal.

12. Système de régulation selon l'une des revendications précédentes, **caractérisé en ce que** l'installation de traitement de signal adéquate est configurée pour transformer des données de charge de l'éolienne en collectifs de charge ou, compte tenu des valeurs moyennes, en matrices de Markov (online-rainflow counting).
